(19) Europäisches Patentamt
European Patent Office
Office européen des brevets

(11) Publication number: 0 237 006
A2

# (12) EUROPEAN PATENT APPLICATION

(21) Application number: 87103330.4

(22) Date of filing: 09.03.87

(51) Int.Cl.³: C 08 G 75/02
C 08 K 7/14

(30) Priority: 11.03.86 JP 53387/86

(43) Date of publication of application:
16.09.87 Bulletin 87/38

(84) Designated Contracting States:
DE FR GB

(71) Applicant: KUREHA KAGAKU KOGYO KABUSHIKI KAISHA
9-11 Horidome-cho 1-chome Nihonbashi Chuo-ku
Tokyo(JP)

(72) Inventor: Fukuda, Makoto
1-76, Eguri Nishiki-Machi
Iwaki-Shi Fukushima-Ken(JP)

(72) Inventor: Kouyama, Toshitaka
2-12, Nakaoka-Machi 4-Chome
Iwaki-Shi Fukushima-Ken(JP)

(72) Inventor: Katto, Takayuki
1-5, Nakaoka-Machi 1-Chome
Iwaki-Shi Fukushima-Ken(JP)

(72) Inventor: Shiiki, Zenya
28-1, Ochiai Nishiki-Machi
Iwaki-Shi Fukushima-Ken(JP)

(74) Representative: Dr. Elisabeth Jung Dr. Jürgen Schirdewahn Dipl.-Ing. Claus Gernhardt
P.O. Box 40 14 68 Clemensstrasse 30
D-8000 München 40(DE)

## (54) Polyarylene thioether compositions.

(57) A substantially non-crosslinked polyarylene thioether composition which comprises a mixture having a desired melt viscosity [based on the reference measurement obtained at a temperature of 310°C and a shear rate of 200 $(sec)^{-1}$], said mixture being obtained by mixing 100 parts of weight of a substantially linear polyarylene thioether (A) having a melt viscosity which is at least 1.3 times said desired melt viscosity with 5 to 90 parts by weight of a substantially uncured polyarylene thioether (B) having a melt viscosity which is up to ¼ times said desired melting viscosity and at least 2 P, and which is significantly improved over a single polyarylene thioether having the same melt viscosity in terms of crystallization temperature upon melting, tensile strength, bending strength and Izod impact strength. The compositions according to the present invention show little or no occurrence of flashes when molded, and can easily be released from molds. The compositions of the present invention are significantly enhanced over a single polyarylene thioether having the same melt viscosity in terms of said properties as well as crystallization temperature upon melting, tensile strength, bending strength and Izod impact strength. These advantages are attained due to the synergistic effect of the polymers A and B.

EP 0 237 006 A2

# POLYARYLENE THIOETHER COMPOSITIONS

## BACKGROUND OF THE INVENTION

### Field of the Invention

The present invention relates to a polyarylene thioether composition which is obtained by incorporating an uncured polyarylene thioether having a considerably lower melt viscosity into a substantially linear, high-molecular weight polyarylene thioether having a higher melt viscosity, and which is enhanced in terms of crystallization temperature, is reduced in terms of the occurrence of flashes, and is improved in terms of moldability or processability and mechanical properties over a sole polyarylene thioether having the same melt viscosity, and is suitable for recycling.

### Statement of the Prior Art

Polyarylene thioethers (hereinafter abbreviated as PATE) represented by polyphenylene thioether are now finding wide use in various fields as engineering plastics of excellent heat-resistance, fire retardancy, chemical resistance and other desirable properties. Ordinarily, PATE is a crystalline high polymer and, for that advantage, is often used, especially in injection molding applications.

The conventional PATE for injection molding comprises a relatively low-molecular weight PATE which has its apparent melt viscosity increased by curing, i.e., heating in the presence of molecular oxygen to form a crosslinked, branched or like structure, and is characterized in that its crystallization rate during injection molding is much higher, its releasability is excellent, and flashes do not readily occur. However, on the other hand, this poses some grave problems in that it is difficult to recycle the resin due to a sharp melt viscosity change during melting, viz., a large irreversible increase in melt viscosity undergoes considerable coloration, has insufficient mechanical

strength (including weld strength), and so on. In view of the disadvantages of such cured PATE, improvements by means of compounding of cured PATE have been attempted to improve their physical properties. Except for somewhat improvement in mechanical strength, all have remained unsolved, however. (Japanese Patent Kokai (Laid-Open for Public Inspection) Publication Nos. 59-11357 & 59-223753).

In the meantime, we have developed an economical method for producing substantially linear, high-molecular weight PATE by adding water and increasing temperatures in the course of polymerization (see Japanese Patent Kokai Publication No. 61-7332).

The substantially linear PATE thus obtained has an amply high molecular weight so that it can be used directly for melt processing such as injection molding without curing. By reason of its molecular structure, this substantially linear PATE is characterized in that it has excellent mechanical strength, easy color regulation due to its extremely limited susceptibility to spontaneous coloration and ease in molding because of the fact that its change-with-time in melt viscosity is extremely reduced during melting, and is economical since recycling of processing scraps is easy. On the other hand, however, this substantially linear, high-molecular weight PATE offers a number of problems in connection with injection molding in that its crystallization rate during injection molding is relatively low so that some difficulty is encountered in improving injection molding cycles, and it tends to produce flashes, although in small amounts.

Prior to processing, it has heretofore been desired to freely regulate the melt crystallization temperature (Tmc) and rate of crystallization depending upon various processings and the conditions therefor. In general, the higher the melt crystallization temperature (Tmc), i.e., the temperature at which a melt is crystallized upon

cooling from its molten state, the higher is the rate of crystallization upon cooling and solidification from the molten state. For this reason, a higher cyrstallization temperature is usually suitable for injection molding, etc. In this sense, the addition of the so-called nucleating agent such as talc has first been attempted as a measure for promoting uniform crystallization of crystalline polymers. However, this method has been found to have insufficient effects upon PATE.

With the foregoing in mind, we have proposed a method for increasing the rate of crystallization upon melting in Japanese Patent Application No. 60-188246, viz. treatment of PATE with an acid or a salt of a weak base/a strong acid; and Japanese Patent Application No. 60-45658, vis. blending of PATE with an organic acid having a high boiling or melting point or its anhydride at a temperature equal to or higher than the melting point of the PATE. Since both of these improved methods provide easily crystallizable PATE, they can be useful techniques depending upon the type of molding or forming method applied. However, it has been found that when it is intended to increase the crystallizability of PATE by post-treatment, additional installation is needed to this end, and that when it is intended to increase the crystallizability of PATE by additives, there is a possibility of undue coloration.

## SUMMARY OF THE INVENTION

We have made intensive and extensive studies to provide solutions to the aforesaid problems, while taking the advantages of a substantially linear, high-molecular weight PATE. As a result, it has been found, surprisingly, that a PATE composition having a desired melt viscosity and a bimodal type molecular-weight distribution, which is obtained by mixing a high-molecular weight PATE having a melt viscosity higher than said desired melt viscosity with an uncured linear PATE having a melt viscosity much lower than said desired melt

viscosity, shows an increased melt crystallization temperature and a correspondingly increased rate of crystallization over a single PATE having the same melt viscosity, i.e., a unimodal type molecular-weight distribution, and exhibits a decreased index of structural viscosity, a limited or reduced occurrence of flashes and comparatively improved mechanical strength over a single PATE having the same melt viscosity. The present invention has been accomplished on the basis of these findings.

More specifically, the polyarylene thioether composition according to the present invention comprises a mixture having a desired melt viscosity determined at a temperature of 310°C and a shear rate of 200 $(sec.)^{-1}$, which mixture is of 100 parts by weight of a substantially linear polyarylene thioether (A) having a melt viscosity of at least 1.3 times said desired melt viscosity with 5-90 parts by weight of a substantially uncured polyarylene thioether (B) having a melt viscosity of up to 1/4 times said desired melt viscosity and at least 2 poises, the composition having its melt crystallization temperature, tensile strength, bending strength and Izod impact strength substantially increased over that of a single polyarylene thioether of the same melt viscosity.

While the PATE compositions according to the present invention based on substantially linear high polymers and having a bimodal molecular weight distribution retain the advantages inherent in the conventional linear PATE compositions of a unimodal molecular weight distribution such that they excel in mechanical properties, they are protected against spontaneous coloration during processing so that they provide moldings whose colors are easily regulated by addition thereto of a dye or colorant, their change in melt viscosity during processing is so limited that they can easily be subjected to melt processing, and they are economical due

to easy recycling of the resulting processing scraps, the PATE compositions according to the present invention having a bimodal type molecular weight distribution are significantly improved over the unimodal type linear PATE compositions having a substantially identical viscosity in terms of various characteristic features, i.e., have more improved crystallization temperature, increased crystallization rate enabling higher molding cycles, elevated thermal deformation temperature and more improved mechanical properties. Accordingly, the present invention provides resin materials best suited for melt processing, in particular injection molding.

## DETAILED DESCRIPTION OF THE INVENTION

### Formation of Basic PATE Structure

The main PATE components of the compositions according to the present invention are substantially linearly polymerized polyarylene thioethers.

In the present disclosure, PATE means polymers containing as the main constitutional element a recurring unit expressed in terms of $-(Ar-S)_n-$ wherein Ar stands for an arylene group.

In view of improvements in heat resistance, moldability or processability, mechanical properties and the like, the arylene group used should preferably comprise a p-phenylene group or contain it as the main ingredient.

Except for the p-phenylene group, the arylene groups to be used may be exemplified by m-phenylene (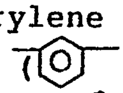), o-phenylene (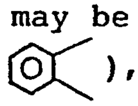), alkyl-substituted phenylene (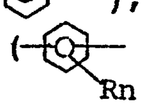, wherein R is an alkyl group, preferably a lower alkyl group, and n is an integer of 1 to 4), p,p'-diphenylene-sulfone 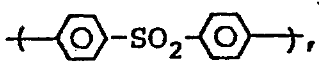, p,p'-diphenylene 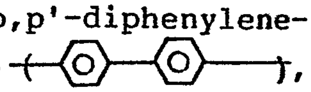, p,p'-diphenylene ether 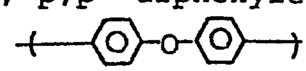, p,p'-diphenylene carbonyl (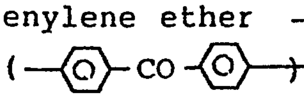, naphthalene 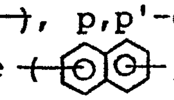) and other groups.

In view of the processability of the compositions, copolymers including different recurring units are preferred to homopolymers of recurring 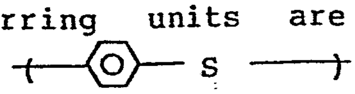 units alone. Preferably, copolymers of 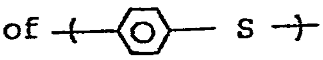 and 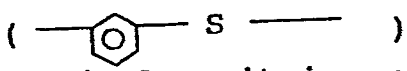 are used as the copolymers. In particular, it is preferred that the recurring units are of block structure, rather than random structure, such as disclosed in Japanese Patent Kokai Publication No. 61-14228, for instance. The block copolymers are virtually equivalent to the random copolymers in the processability to be achieved, but are much superior in physical properties, such as heat resistance, mechanical properties and the like, to be achieved. The block copolymers used should preferably contain 5 to 50 mole %, particularly 10 to 25 mole %, of the recurring 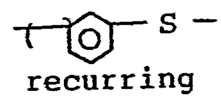 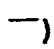 units, the remaining preferably being the recurring 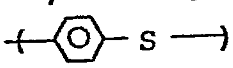.

The base polymer A used in the present invention is of a substantially linear structure. For instance, crosslinked products obtained using an effective amount of a crosslinker (e.g., 1,2,4-trihalobenzene) at the time of polymerization or those obtained by polymerizing polymers at elevated temperatures in the presence of $O_2$, etc. for effective crosslinking are not preferred for use in the present invention. Ordinarily, these crosslinked products are not only undesirable in view of their physical properties since they are so mechanically fragile, but are also undesired in view of processability, since they undergo considerable changes in melt viscosity so that difficulty is encountered in recycling.

A linear PATE meeting the aforesaid conditions imposed upon the resins according to the present invention can be economically produced by the methods disclosed in Japanese Patent Kokai Publication No. 61-7332, or can be produced by the method disclosed in Japanese Patent Publication No. 52-12240 teaching that a

large amount of carboxylic acid is added to the polymerization system, although the latter is rather costly one.

On the other hand, as the resin material B to be added use may be made of any linear or nonlinear PATE or any random or block copolymers of arylene thioether with the proviso that they have a low viscosity and are substantially uncured. Cured PATE is undesirable, since the resulting compositions deteriorate in thermal stability and, in particular, give rise to large irreversible viscosity changes at the time of melting. The uncured, low-viscosity PATE may be produced by the aforesaid methods, but can also be easily prepared by the available conventional methods such as disclosed in Japanese Patent Publication No. 45-3368, for instance.

## Preparation of PATE Compositions

The PATE compositions according to the present invention are PATE mixtures having a bimodal molecular-weight distribution and a desired melt viscosity, which are obtained by mixing the starting resin, PATE(A), consisting of substantially linear, high-molecular weight PATE having a melt viscosity higher than the desired melt viscosity with the uncured, low-molecular weight PATE, PATE(B), having a melt viscosity considerably lower than the desired melt viscosity.

PATE(A) to be used as the starting resin is substantially linear PATE which desirably has a melt viscosity of at least 1.3 times, preferably at least 1.5 times, as large as the melt viscosity desired in the composition. In the present disclosure, it is noted that the melt viscosity is determined at a temperature of 310°C and a shear rate of 200 $(sec.)^{-1}$. PATE having a melt viscosity of up to 1.3 times is not preferred, since there is a possibility that the advantages inherent in the present invention such as increases in the temperature and rate of crystallization, prevention of the occurrence of flashes, improvements in mechanical

properties to be achieved by the incorporation of the other component B may become insufficient.

The resin B to be incorporated into the starting resin A as the additive is uncured PATE which desirably has a melt viscosity of up to 1/4 times, particularly up to 1/5 times, as large as the aforesaid desired melt viscosity and at least 2 poises (p). PATE having a melt viscosity exceeding 1/4 times is undesirable since there is a possibility that the advantages inherent in the present invention to be achieved may become insufficient. PATE having a melt viscosity of lower than 2 P may contain oligomers in most cases, thus leading to deterioration of the thermal stability of the end compositions.

The amount of the additive resin B to be incorporated into the starting resin A varies depending upon the melt viscosity of A and B and the desired melt viscosity of the end compositions, but is selected from the range of 5 to 90 parts by weight, most preferably 10 to 80 parts by weight, per 100 parts by weight of A. In an amount of B of less than 5 parts by weight, the advantages inherent in the present invention to be achieved may become insufficient. On the other hand, the mechanical properties of the end compositions may drop considerably in an amount of B exceeding 90 parts by weight.

While the compositions of the present invention are ordinarily in coherent masses obtained by mixing together both components A and B by any method accompanied by their melting, it is understood that the term "composition" in the present invention includes a mixture of both components in the form of a powder dry blend.

Since PATE is essentially a thermoplastic resin, various additives ordinarily employed for thermoplastic resins may be added to the PATE compositions having a bimodal molecular-weight distribution in accordance with the present invention. Specifically, the compositions of

the present invention may be molten and mixed with powdery inorganic fillers such as mica, $TiO_2$, $SiO_2$, $Al_2O_3$, $CaCO_3$, carbon black, talc, $Ca_2SiO_4$ and $MgCO_3$ or fibrous fillers such as glass, carbon, graphite, aramide, potassium titanate, silica and wollastonite, into the end compositions. The invented compositions may also be blended with polyimide, polyamide, polyether ketone, polyether ether ketone, polysulfone, polyether sulfone, polyether imide, polyarylene, polyphenylene ether, polycarbonate, polyethylene terephthalate, polybutylene terephthalate, polyacetal, polyolefins such as, e.g. polyethylene, polypropylene, and polyisobutylene, ABS, polyvinyl chloride, polymethyl methacrylate, polystyrene, polyvinylidene fluoride, polytetrafluoroethylene, tetrafluoroethylene copolymer and so on into the end compositions. In addition to such fillers, use may be made of small amounts of stabilizers, nucleating agents, lubricants, rust preventives, coupling agents, antioxidants, coloring agents and other agents.

It is therefore understood that the "polyarylene thioether compositions" referred to in the present disclosure include not only compositions consisting only of both components A and B, but also compositions containing a variety of the additives as mentioned just above in addition thereto. In the case of compositions containing resin ingredients other than the components A and B, it is preferred that the components A and B comprise main resin constituents.

Use of PATE Compositions

Both of the PATE compositions in accordance with the present invention, one consisting only of the two PATE components and the other containing various additives in addition thereto, having a bimodal molecular-weight distribution, can be subjected to various melt processings inclusive of injection molding such as, for instance, extrusion and compression molding wherein the advantages thanks to the PATE compositions in accordance

with the present invention are utilized such that the mechanical properties are good, coloring by a colorant or a dye is easy, the change in the melt viscosity at processing is small, recycle of the scraps of the composition used is feasible, molding cycle efficiency is high thanks to the higher melt crystallization temperature and the higher crystallization rate of the composition, mold-releasability is good, formation of flashes is small, and the heat distortion temperature is high.

The resulting products can be widely used as moldings, sheet films including uniaxially and biaxially oriented films, yarns, pipes, profiles or the like in the electric/electronic, precision machinery, automobile/aircraft, chemical industry, medical, food packaging, tableware, sports and like fields.

## Experimental Examples

### Synthesis Example 1

A 2-$m^3$ polymerization vessel equipped with a stirrer and lined with titanium was charged with 2.20 kmol of hydrous sodium sulfide ($Na_2S \cdot 5H_2O$; a solid content of 45.6%) and 1,100 kg of N-methyl-2-pyrrolidone (hereinafter abbreviated as NMP), and was heated to about 200°C to distill off water. Next, 2.16 kmol of p-dichlorobenzene (hereinafter abbreviated as p-DCB) were added for a 5-hour reaction under agitation at 220°C, and 4.4 kmol of pure water was then added for a 5-hour reaction under agitation at 255°C. After the reaction, the reaction product was cooled, and the polymer was filtered out, washed with water and acetone, neutralized with an aqueous solution of $NH_4Cl$, washed again with water, and dried to prepare a base polymer (P-1).

### Synthesis Example 2

According to the procedure of Synthesis Example 1, 2.20 kmol of hydrous $Na_2S$ and 1,100 kg of NMP were charged, then heated and dehydrated. Next, 2.15 kmol of p-DCB were added for a 5-hour reaction at 210°C, and 5.25

kmol of pure water was then added for a 6-hour reaction at 260°C. After the reaction, post-treatments were carried out according to the procedure of Synthesis Example 1 to obtain a base polymer (P-2).

Synthesis Example 3

A 200-lit. polymerization vessel provided with a stirrer and lined with titanium was charged with 210 mol of hydrous $Na_2S$ (having a solid content of 45.6%) and 80 kg of NMP, which step was followed by heating and dehydrated. Next, 201 mol of m-dichlorobenzene (hereinafter abbreviated as m-DCB) and 31 kg of NMP were added for a 2-hour reaction at 220°C and then a 7-hour reaction at 230°C, thereby obtaining a mixed liquid (M1), the polymer in which was found to have an average degree of polymerization of 40 from the amount of the terminal chlorine of a polymer sample. The reaction product was removed from the polymerization vessel, and was stored for about 2 days.

On the other hand, the same polymerization vessel was charged with 200 mol of hydrous $Na_2S$ and 80 kg of NMP, which were then heated, and dehydrated. Next, 203 mol of p-DCB, 27.5 kg of NMP and 35.5 mol of pure water were added to the thus obtained product under agitation and cooling to obtain a mixed liquid (M2). The mixed liquids M1 and M2 were then charged into a 200-lit. vessel at a M1/M2 ratio of 22.5 kg/126 kg for an 8-hour reaction at 220°C, and 690 mol of pure water was added for a 7-hour reaction at 260°C. After the reaction, post-treatments were carried out according to the procedure of Synthesis Example 1 to obtain a base polymer (P-3), which was found to have a composition expressed in terms of p/m = 85 mol/15 mol by the FTIR method, Fourier transformation infrared spectrometry.

Synthesis Example 4

According to the procedure of Synthesis Example 1, 2.20 kmol of hydrous $Na_2S$ and 1,100 kg of NMP were charged, then heated and dehydrated. Next, 2.16 kmol of

p-DCB were added for a 5-hour reaction at 220°C, and 4.40 kmol of pure water was added for a further 4-hour reaction at 255°C. After the reaction, post-treatments were carried out in accordance with Synthesis Example 1 to obtain a polymer (P-4).

From the standpoint of its melt viscosity (to be described later), this polymer was used as the linear PATE for conventional standard injection molding.

Synthesis Example 5

According to the procedure of Synthesis Example 1, 2.20 kmol of $Na_2S$ and 1,100 kg of NMP were charged, then heated, and dehydrated. Thereafter, 2.16 kmol of p-DCB and 4.00 kmol of pure water were added for a 15-hour reaction at 220°C. After the reaction, post-treatments were carried out in accordance with Synthesis Example 1 to obtain an additive polymer (A-1).

Synthesis Example 6

To obtain an additive polymer (A-2), Synthesis Example 5 was repeated, except that a mixture of 2.06 kmol of p-DCB with 0.10 kmol of m-DCB was added in place of 2.16 kmol of p-DCB.

Synthesis Example 7

In accordance with the procedure of Synthesis Example 1, 2.20 kmol of hydrous $Na_2S$ and 1,100 kg of NMP were charged, then heated, and dehydrated. Next, 2.25 kmol of p-DCB were added for a 5-hour reaction at 220°C, and 4.40 kmol of pure water was then added for a further 5-hour reaction at 255°C.

After the reaction, post-treatments were carried out in accordance with Synthesis Example 1 to obtain an additive polymer (A-3).

Processing Example 1

The thus obtained polymers P-1 to P-4 and additive polymers A-1 to A-3 were mixed together in specific amounts in a Henschel mixer into the end polymer compositions having a melt viscosity of 1,600 ± 100 P and 3,000 ± 100 P. Portions of these polymers and portions

of the starting polymers were extruded with a melt extruder and quenched to prepare pellets of resins P-1-1, P-1-2, P-1-3, P-2-1 and P-2-2. The melt viscosity of each resin of pellets was measured at 310°C with a Capillograph (manufactured by Toyo Seiki K.K., Japan), and was determined by interpolation and extrapolation at a shear rate of 200 $(sec.)^{-1}$.

Further, Tmc was measured by cooling each resin of pellets at a cooling rate of 10°C/min. from the molten state with a DSC, a differential scanning calorimeter (manufactured by Shimadzu Seisakusho K.K. Japan). The Tmc of each resin of pellets at that time was then determined from its endothermic peak. The results are summarized in Tables 1 and 2.

No rise in Tmc was observed in the mixture P-1-3 of P-1 having a melt viscosity (of 3,000 P) which was 1.9 times the desired melting viscosity of 1,600 P with A-3 having a melt viscosity (of 610 P) which was 1/2.6 times (larger than 1/4) the desired melting viscosity. However, the remaining mixtures were found to have increased in both Tmc and the rate of crystallization and had not lost their transparency. It was also noted that the higher the Tmc, the higher is the rate of crystallization in ordinary melt processings.

Processing Example 2

Forty (40) % by weight of glass fibers (hereinafter abbreviated as GF) were added to the polymer compositions obtained in Processing Example 1 and the standard polymer P-4, and the resulting products were then melt-extruded through a melt extruder and quenched to prepare GF-containing pellets.

With an injection molding machine (IS-75EV manufactured by Toshiba Kikai), these GF-containing pellets were injection-molded at a resin temperature of 335°C, an injection pressure of 1,000 $kg/cm^2$ and a mold temperature of 140°C for a mold retaining time of 30 seconds to mold test samples P-4-G, P-1-1-G, P-1-2-G, P-2-1-G, P-3-1-G, P-1-G and P-2-2-G for the observation of their mold release characteristics. The test samples were also measured with respect to the occurrence of flashes as well as their tensile strength, bending strength, Izod impact strength and thermal deformation temperature. The results are summarized in Table 3.

The samples obtained by mixing the compositions in accordance with the present invention with GF (P-1-1-G, P-1-2-G, P-2-1-G, P-3-1-G and P-2-2-G) showed a 3 to 10°C increase in the thermal deformation temperature and a higher rate of crystallization as compared with the corresponding standard GF compositions (P-4-G having a melt viscosity of 6,400 P and P-1-1-G having a melt viscosity of 13,000 P). As a result, it was found that they gave rise to little or no occurrence of flashes and showed better mold release characteristics and improved mechanical properties. It is thus understood that any heat setting is not needed.

Table 1

| Polymer code | Classification | Melt Viscosity(*1) (poise) | Melt Crystallization Temperature (°C) |
|---|---|---|---|
| P-1 | Base Polymer | 3,000 | 243 |
| P-2 | Base Polymer | 5,100 | 235 |
| P-3 | Base Polymer | 2,900 | 240 |
| P-4 | Base Polymer | 1,600 | 245 |
| A-1 | Additive Polymer | 180 | 247 |
| A-2 | Additive Polymer | 90 | 245 |
| A-3 | Additive Polymer | 610 | 247 |

(*1) Melt viscosity of pellets determined at 310°C and a shear rate of 200 (sec.)-1

Table 2

| Polymer Code or Polymer Composition Code | P-4 | P-1-1 | P-1-2 | P-1-3 | P-2-1 | P-3-1 | P-1 | P-2-2 |
|---|---|---|---|---|---|---|---|---|
| Base polymer (A) (parts by wt.) | P-4(100) | P-1(100) | P-1(100) | P-1(100) | P-2(100) | P-3(100) | P-1 | P-2(100) |
| Additive Polymer (B) (parts by wt.) | - | A-1( 25) | A-2( 15) | A-3( 35) | A-1( 55) | A-1( 25) | - | A-1( 20) |
| Melt Viscosity (poise) | 1,600 | 1,600 | 1,500 | 1,600 | 1,700 | 1,500 | 3,000 | 2,900 |
| Melt Crystallization Temp. (°C) | 245 | 251 | 254 | 243 | 247 | 248 | 243 | 245 |
| Increases in Melt Crystallization Temp. (°C) | - | +6 | +9 | -2 | +2 | +3 | - | +2 |
| Remarks | Base Polymer <u>per se</u> | | | (*1) | | | Base Polymer <u>per se</u>. | |

(*1) Viscosity of A-3 > (1,600/4) poise

Table 3

| GF Composition Code (*1) (GF=40 % by wt.) | | P-4-G | P-1-1-G | P-1-2-G | P-2-1-G | P-3-1-G | P-1-G | P-2-2-G |
|---|---|---|---|---|---|---|---|---|
| Polymer Code or Polymer Composition code | | P-4 | P-1-1 | P-1-2 | P-2-1 | P-3-1 | P-1 | P-2-2 |
| Melt Viscosity of GF Composition (poise) | | 6,400 | 6,500 | 6,600 | 6,300 | 6,300 | 13,000 | 14,000 |
| Occurrence of Flash (*2) | | X | O | O | O | O | X | O |
| Mold - releasability (*3) | | X | O | O | O | O | X | Δ |
| Tensile Strength ($kg/mm^2$) | ASTM D638 | 14 | 17 | 17 | 16 | 17 | 17 | 20 |
| Bending Strength ($kg/mm^2$) | ASTM D790 | 23 | 26 | 27 | 25 | 26 | 26 | 29 |
| Izod impact strength (V-notch) (Kgcm/cm) | ASTM D256 | 7.4 | 8.7 | 8.9 | 8.0 | 8.6 | 9.1 | 10.2 |
| Thermal Deformation (*4) temperature (264 psi) (°C) | ASTM D648 | 255 | 262 | 265 | 258 | 260 | 252 | 257 |
| Remarks | | Reference GF Composition | | | | | Reference GF Composition | |

(*1) Glass Fibers (CS3J-942CB manufactured by Nittobo K.K.), (*2) O: Extremely reduced occurrence, X: Increased occurrence, (*3) O: satisfactory, X: unsatisfactory, Δ: somewhat satisfactory,
(*4) Test piece of 1/8 inch in thickness.

Processing Example 3

A cured poly-p-phenylene thioether was produced by heating the additive polymer A-1 in an atmosphere of air at 250°C for 4 hours. The cured polymer obtained, polymer (HC), had a melt viscosity of 2900 poise.

To 100 parts by weight of the polymer HC was added 24 parts by weight of the additive polymer A-1, and the mixture was blended by means of a Henschel mixture into a composition of a melt viscosity of 1600 poise. To this composition was added GF and the mixture was blended to produce composition HC-1-GB containing 40% by weight of GF. On the other hand, to the composition P-1-1 was added GF and the mixture was blended to produce composition P-1-1-GB.

Each of these compositions was subjected to melt extrusion by means of a single-screw extruder manufactured by BRABENDER with D of 20 mmϕ and L of 500 mm at 320°C and a rotation of the screw of 40 RPM into pellets of 4 mmϕ. The run was repeated 5 times, and the capability of the pellets for the recycle use was determined.

The results obtained are as follows:

The composition HC-1-GB comprising the cured polymer had its melt viscosity increased to more than 20,000 poise through only one run of melt processing, whereby the subsequent runs of melt processing were substantially difficult.

The composition P-1-1-GB based on the linear polymer with no content of a cured polymer showed only 5% or less of the change in the melt viscosity even after 5 runs of the melt processing.

CLAIMS:

1. A substantially non-crosslinked polyarylene thioether composition which comprises a mixture having a desired melt viscosity determined at a temperature of 310°C and a shear rate of 200 $(sec)^{-1}$, said mixture being of 100 parts by weight of a substantially linear polyarylene thioether (A) having a melt viscosity which is at least 1.3 times said desired melt viscosity with 5 to 90 parts by weight of a substantially uncured polyarylene thioether (B) having a melt viscosity which is up to 1/4 times said desired melt viscosity and at least 2 poises, and which polyarylene thioether composition is significantly improved over a single polyarylene thioether having the same melt viscosity in terms of melt crystallization temperature, tensile strength, bending strength and Izod impact strength.

2. A polyarylene thioether composition as claimed in Claim 1, wherein said substantially linear high-molecular polyarylene thioether A is a polymer comprising as the main constitutional element a recurring unit 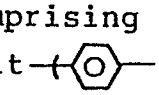 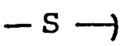.

3. A polyarylene thioether composition as claimed in any one of the preceding claims, wherein said substantially uncured polyarylene thieother B is a polymer containing as the main constitutional element a recurring unit 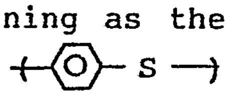.

4. A polyarylene thioether composition as claimed in any one of the preceding claims, wherein said substantially linear high-molecular polyarylene thioether A is a block copolymer comprising a block consisting of a recurring unit 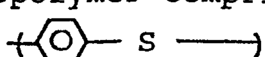 and a block consisting of a recurring unit 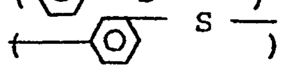.

5. A polyarylene thioether composition as claimed in any one of the preceding claims, wherein said substantially uncured polyarylene thioether B is a polymer containing as the main constitutional element a recurring unit 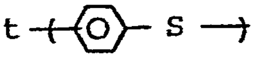.

6. A polyarylene thioether composition as defined in Claim 1, which is filled with glass fibers.